# EUROPÄISCHE PATENTSCHRIFT

(11) **EP 2 451 710 B1**
(45) Veröffentlichungstag und Bekanntmachung des Hinweises auf die Patenterteilung: **01.01.2014**
(21) Anmeldenummer: 11749411.2
(22) Anmeldetag: 29.08.2011
(51) Int. Cl.: B64F 1/20

(54) **BELEUCHTUNGSVORRICHTUNG FÜR FLUGHÄFEN**
LIGHTING DEVICE FOR AIRPORTS
DISPOSITIF D'ÉCLAIRAGE POUR AÉROPORTS

(30) Priorität: 31.08.2010 DE 102010036019
(43) Veröffentlichungstag der Anmeldung: 16.05.2012
(73) Patentinhaber: Hella KGaA Hueck & Co, 59552 Lippstadt (DE)
(72) Erfinder: ABEL, Björn, 8053 Zürich (CH); RÖBBECKE, Thomas Albert, 59597 Erwitte (DE); RÜTHER, Ralf, 59609 Anröchte (DE); AURAS, Klaus, 59555 Lippstadt (DE)
(74) Vertreter: Lohr, Georg
(86) Internationale Anmeldenummer: PCT/EP2011/064777
(87) Internationale Veröffentlichungsnummer: WO 2012/028562

(56) Entgegenhaltungen:
- DE-U1-202009 009 583
- US-A- 3 250 907
- US-A- 3 353 013
- US-A- 3 624 379

## Beschreibung

Die Erfindung betrifft eine Beleuchtungsvorrichtung für Flughäfen, insbesondere Unterflurfeuer, mit einem ein Gehäuseunterteil und ein Gehäuseoberteil aufweisenden Gehäuse, wobei das Gehäuseoberteil eine Ausnehmung aufweist zur Aufnahme einer Lichtscheibe, über die Licht von einer in einem Innenraum des Gehäuses angeordneten Lichtquelle in eine Umgebung abstrahlbar ist, mit einem Lichtquellenträger auf dem die Lichtquelle montiert ist.

DE 20 2009 009 583 U1 offenbart ein gattungsgemäßes Unterflurfeuer mit einem Gehäuseunterteil und einem Gehäuseoberteil, die einen Innenraum bilden. In dem Innenraum sind LED-Lichtquellen jeweils mit einer zugehörigen Optik angeordnet. Von den LED-Lichtquellen emittiertes Licht wird über ein Prisma abgestrahlt, das in einer Aussparung des Gehäuseoberteils sitzt. Die LED-Lichtquellen sind auf einem LED-Lichtquellenträger 25 positioniert. Dieser LED-Lichtquellenträger liegt auf einem Wärmeleitelement auf und mit einer planen Rückseite an einem Wärmeleitsteg an. Zur Montage werden zunächst die vormontierten LED-Lichtquellenträger in den Innenraum eingesetzt, anschließend wird das plattenartige Wärmeleitelement gegebenenfalls eingesetzt und das Gehäuse durch Aufsetzen und Verschrauben des Gehäuseunterteils verschlossen.

US 3,624,379 offenbart ebenfalls ein Unterflurfeuer. Das Unterflurfeuer hat ein Gehäuse aus einem Gehäuseunterteil das vor einem Deckel abgedeckt wird. In dem Gehäuse sitzt eine Beleuchtungseinheit die von einem Ring in dem Gehäuse positioniert wird. Um die Wärme des Leuchtmittels an das Gehäuseunterteil abzugeben, hat die Beleuchtungseinheit ein Unterteil mit einer Vielzahl von Kühlrippen, das plan auf einer komplementären Gegenfläche aufliegt. Zur Montage werden der Zentrierring und die Beleuchtungseinheit in das Gehäuseunterteil eingesetzt, anschließend wird der Deckel aufgesetzt. Nun werden Deckel und Gehäuseunterteil durch Schrauben miteinander verbolzt.

Aufgabe der vorliegenden Erfindung ist es daher, eine Beleuchtungsvorrichtung derart weiterzubilden, dass unter erleichtertem Montageaufwand mit wenigen Komponenten ein Bauraum sparendes Gehäuse bereitgestellt wird, wobei eine wirksame Wärmeabfuhr gewährleistet ist.

Zur Lösung dieser Aufgabe ist die Erfindung in Verbindung mit dem Oberbegriff des Patentanspruchs 1 dadurch gekennzeichnet, dass der Wärmeleitblock an dem Gehäuseoberteil lösbar befestigt ist.

Ein Vorteil der Erfindung besteht darin, dass eine Lichtquelle, ein die Lichtquelle tragender Lichtquellenträger sowie gegebenenfalls weitere Optikelemente, wie zum Beispiel ein Reflektor, zusammen mit einem Wärmeleitblock eine gemeinsame Baueinheit bilden, die in einer Aussparung des Gehäuseoberteils beispielsweise durch Verschraubung befestigbar ist. Das Gehäuseoberteil dient nicht nur als Abdeckung, sondern auch als Montagebasisteil mit Funktionsflächen für die Aufnahme dieser Baueinheit. Hierdurch wird die Reparaturfreundlichkeit verbessert bzw. die Montagekosten werden reduziert. Dadurch, dass Randseiten und/oder zumindest teilweise Flachseiten des Wärmeleitblocks unmittelbar an korrespondierenden Seiten der Aussparung angeordnet sind, kann eine Wärmeableitung von dem Lichtquellenträger über den Wärmeleitblock in das Gehäuse erfolgen.

Nach einer Weiterbildung der Erfindung ist ein Wärmeleitblock vorgesehen, bei dem die Dimension des Wärmeleitblocks größer ist als die Dimension des Lichtquellenträgers. Die Dimension des Wärmeleitblocks ist kleiner als die Dimension des Gehäuseoberteils und des Gehäuseunterteils. Der Wärmeleitblock dient zum einen als Träger für die Lichtquelle bzw. weiterer Optikelemente und zum anderen zur Wärmeabfuhr in das Gehäuseoberteil. Die so gebildete Baueinheit ermöglicht eine Verringerung der Toleranzen, da im Wesentlichen lediglich das Gehäuseoberteil mit der Baueinheit einerseits und das Gehäuseoberteil mit dem Gehäuseunterteil andererseits verbunden werden muss.

Nach einer Weiterbildung der Erfindung weist der Wärmeleitblock einen ersten Flächenabschnitt zur Aufnahme des Lichtquellenträgers bzw. der Lichtquelle oder weiterer Optikelemente auf und zum anderen einen benachbarten zweiten Flächenabschnitt zur Wärmeabfuhr und/oder zur Umleitung einer Stromzuführung. Der zweite Flächenabschnitt dient somit nicht nur zur Wärmeableitung, sondern ermöglicht zum anderen eine Kontaktierung der an einer oberen Flachseite angeordneten Lichtquelle mit einer in dem Gehäuseunterteil angeordneten Ansteuerelektronik.

Nach einer Weiterbildung der Erfindung ist der Wärmeleitblock und/oder das Gehäuseoberteil und/oder das Gehäuseunterteil aus einem Metallmaterial, vorzugsweise aus einem Aluminiummaterial ausgebildet, so dass eine verbesserte Wärmeabfuhr gewährleistet ist.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

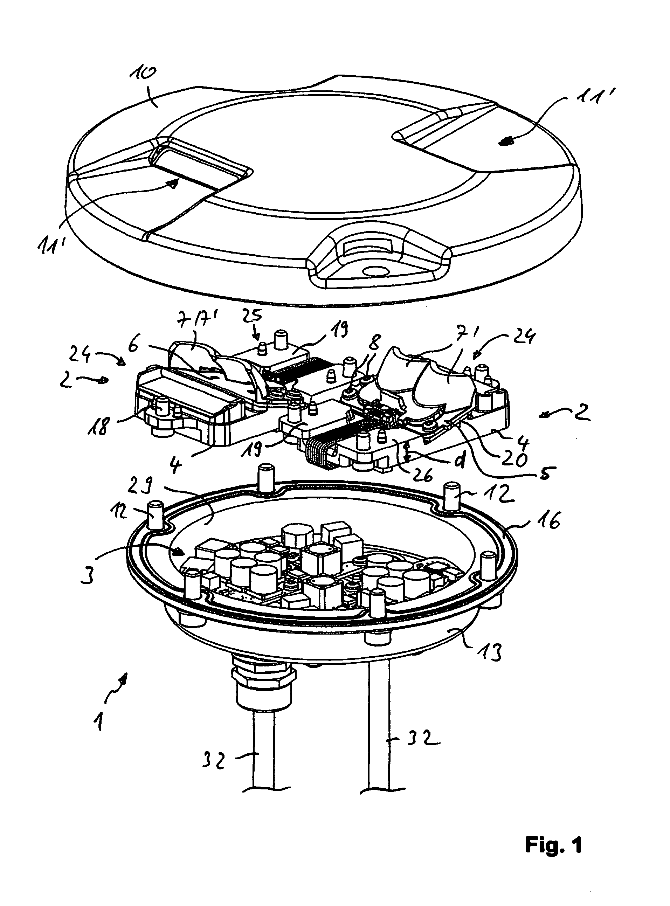

- Fig. 1: eine Explosionsdarstellung einer Beleuchtungsvorrichtung von oben gesehen,

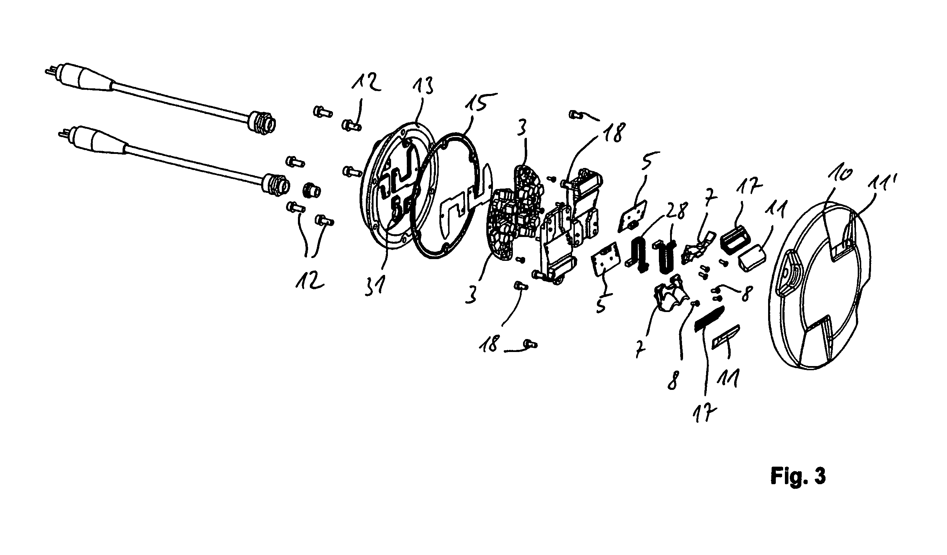

- Fig. 2: eine Explosionsdarstellung der Beleuchtungsvorrichtung gemäß Figur 1 von unten gesehen und

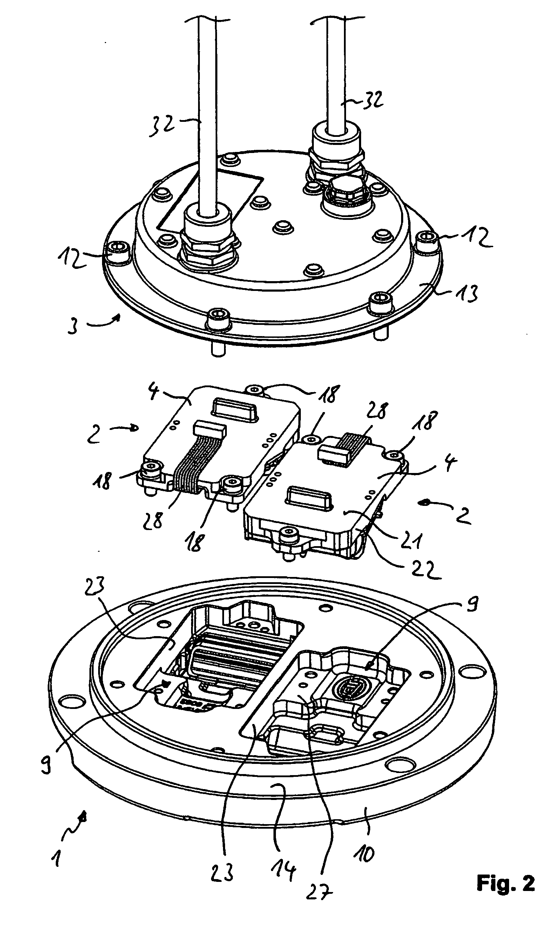

- Fig. 3: eine Explosionsdarstellung aller Bauteile der Beleuchtungsvorrichtung.

Eine erfindungsgemäße Beleuchtungsvorrichtung kann vorzugsweise auf Flughäfen als Unterflurfeuer eingesetzt werden, um eine Fahr- oder Rollbahn zu markieren.

Die Beleuchtungsvorrichtung weist ein Gehäuse 1 auf, in dem im Wesentlichen zwei Leuchtmodule 2 und eine Ansteuerelektronik 3 angeordnet sind.

Die Leuchtmodule 2 bestehen jeweils aus einem massiven quaderförmigen Wärmeleitblock 4, auf dem ein mit einer Lichtquelle 6 bestückter Lichtquellenträger 5 sowie ein Reflektor 7 durch Verschraubung 8 befestigt sind. Der Lichtquellenträger 5 ist als eine Leiterplatte ausgebildet, auf der LED-Lichtquellen 6, im vorliegenden Fall zwei LED-Lichtquellen 6 (LED-Chips), angeordnet sind. Den LED-Lichtquellen 6 sind jeweils Reflektorflächen 7' zugeordnet, so dass das von den Lichtquellen 6 abgestrahlte Licht in Richtung einer in einer Ausnehmung 11' eines Gehäuseoberteils 10 eingefassten Lichtscheibe 11 umgelenkt und dann in eine Umgebung abgestrahlt werden kann. Das Gehäuseoberteil 10 ist durch Verschraubung 12 mit einem Gehäuseunterteil 13 des Gehäuses 1 lösbar verbunden, wobei ein umlaufender Rand 14 des Gehäuseoberteils 10 über eine Flachdichtung 15 direkt mit einem umlaufenden Rand 16 des Gehäuseunterteils 13 verbunden ist.

Die Lichtscheibe 11 ist über eine Dichtung 17 in der Ausnehmung 11' des Gehäuseoberteils 10 eingefasst. Dadurch, dass das Leuchtmodul 2 über eine Verschraubung 18 lösbar mit dem Gehäuseoberteil 10 verbunden ist, wird ein fester Sitz der Lichtscheibe 11 in der Ausnehmung 11' gewährleistet.

Nach einer nicht dargestellten alternativen Ausführungsform der Erfindung kann das Leuchtmodul 2 bzw. der Wärmeleitblock 4 durch Bajonettierung oder durch Verrastung an dem Gehäuseoberteil 10 lösbar befestigt sein.

Der Wärmeleitblock 4 weist an einer oberen Flachseite 19 desselben eine Schrägfläche 20 auf, an der der plattenförmige Lichtquellenträger 5 mittels der Verschraubung 8 befestigt ist. Eine gegenüberliegende untere Flachseite 21 des Wärmeleitblocks 4 ist vorzugsweise bündig zu einer Unterseite des Gehäuseoberteils 10 angeordnet. Umlaufende Randseiten 22 des Wärmeleitblocks 4 liegen direkt an korrespondierenden Randseiten 23 einer Aussparung 9 des Gehäuseoberteils 10 an. Vorzugsweise ist der Wärmeleitblock 4 formschlüssig in der Aussparung 9 des Gehäuseoberteils 10 angeordnet.

Nach der Erfindung kann der Wärmeleitblock 4 somit formschlüssig und/oder kraftschlüssig in der Aussparung 9 des Gehäuseoberteils 10 angeordnet sein.

Der Lichtquellenträger 5 bzw. der Reflektor 7 ist in einem ersten Flächenabschnitt 24 an der oberen Flachseite 19 des Wärmeleitblocks 4 angeordnet. In einem zweiten Flächenabschnitt 25 des Wärmeleitblocks 4 sind zum einen Wärmeableitflächen 26, die direkt an korrespondierenden Bodenflächen 27 der Aussparung 9 anliegen, zur Verbesserung der Wärmeabfuhr vorgesehen. Die Wärmleitflächen bilden einen Teil der oberen Flachseite 19). Zum anderen ermöglicht der zweite Flächenabschnitt 25 eine Umlenkung bzw. Umleitung einer Stromzuführung 28, die als ein Flachkabel ausgebildet ist. Ein Ende der Stromzuführung 28 ist mit einem Anschluss des Lichtquellenträgers 5 verbunden. Ein gegenüberliegendes Ende der Stromzuführung 28 ist mit einem Anschluss der Ansteuerelektronik 3 verbunden, die in einer Vertiefung 29 des Gehäuseunterteils 13 positioniert ist.

Der Wärmeleitblock 4 weist eine Wanddicke d auf, die größer ist als eine Wanddicke des Lichtquellenträgers 5. Vorzugsweise ist die Wanddicke d des Wärmeleitblocks 4 mehr als doppelt so groß wie die Wandstärke des Lichtquellenträgers 5.

Der quaderförmige Wärmeleitblock 4 weist Flachseiten 19, 21 auf, die mehr als doppelt so groß sind wie Flachseiten des Lichtquellenträgers 5.

Der Wärmeleitblock 4 sowie das Gehäuseoberteil 10 und das Gehäuseunterteil 13 sind vorzugsweise aus einem Wärme leitenden Metallmaterial, insbesondere Aluminiummaterial, hergestellt. Das Gehäuseunterteil 13 ist über die Verschraubung 12 mit dem Gehäuseoberteil 10 lösbar verbunden. An einer Bodenfläche des Gehäuseunterteils 13 sind Öffnungen 31 für den Anschluss von Elektrokabeln 32 vorgesehen, damit die Ansteuerelektronik 3 mit elektrischem Strom gespeist werden kann.

Zur Montage der Beleuchtungsvorrichtung wird in einem ersten Schritt das Leuchtmodul 2 unter Verschraubung 8 des Lichtquellenträgers 5 an dem Wärmeleitblock 4 und unter Anschließen der Stromzuführung 28 an dem Lichtquellenträger 5 montiert. Anschließend wird das Leuchtmodul 2 mittels der Verschraubung 18 in der Aussparung 9 arretiert, wobei vorher die Lichtscheibe 11 in der Ausnehmung 11' positioniert worden ist. Anschließend kann das mit der Ansteuerelektronik 3 versehene Gehäuseunterteil 13 durch die Verschraubung 12 mit dem Gehäuseoberteil 10 verbunden werden, wobei in dem Innenraum des Gehäuses 1 das Leuchtmodul 2 und die Ansteuerelektronik 3 angeordnet sind.

### Bezugszeichenliste

- 1: Gehäuse
- 2: Leuchtmodule
- 3: Ansteuerelektronik
- 4: Wärmeleitblock
- 5: Lichtquellenträger
- 6: Lichtquelle
- 7, 7': Reflektor, Reflektorflächen
- 8: Verschraubung
- 9: Aussparung
- 10: Gehäuseoberteil
- 11, 11': Lichtscheibe / Ausnehmung
- 12: Verschraubung
- 13: Gehäuseunterteil
- 14: Rand
- 15: Flachdichtung
- 16: Rand
- 17: Dichtung
- 18: Verschraubung
- 19: obere Flachseite
- 20: Schrägflächen
- 21: untere Flachseite
- 22: Randseite
- 23: Randseite
- 24: erster Flächenabschnitt
- 25: zweiter Flächenabschnitt
- 26: Wärmeableitflächen
- 27: Bodenflächen
- 28: Stromzuführung
- 29: Vertiefung
- 31: Öffnung
- 32: Elektrokabel
- d: Wanddicke

## Patentansprüche

1. Beleuchtungsvorrichtung für Flughäfen, insbesondere Unterflurfeuer, mit
- einem ein Gehäuseunterteil und ein Gehäuseoberteil aufweisenden Gehäuse, wobei das Gehäuseoberteil eine Ausnehmung aufweist zur Aufnahme einer Lichtscheibe, über die Licht von einer in einem Innenraum des Gehäuses angeordneten Lichtquelle in eine Umgebung abstrahlbar ist, und
- einem Lichtquellenträger auf dem die Lichtquelle montiert ist, wobei der Lichtquellenträger (5) an einem Wärmeleitblock (4) befestigt ist, der in einer Aussparung (9) des Gehäuseoberteils (10) arretiert ist, wobei Randseiten (22) und/oder zumindest teilweise Flachseiten (19) des Wärmeleitblocks (4) direkt an korrespondierenden Seiten (27) der Aussparung (9) anliegen,
**dadurch gekennzeichnet, dass**
der Wärmeleitblock (4) an dem Gehäuseoberteil (10) lösbar befestigt ist.

2. Beleuchtungsvorrichtung nach Anspruch 1, **dadurch gekennzeichnet, dass** der Wärmeleitblock (4) zum einen einen ersten Flächenabschnitt (24) zur Aufnahme des Lichtquellenträgers (5) und zur Wärmeabfuhr und zum anderen einen benachbarten zweiten Flächenabschnitt (25) zur Umleitung einer Stromzuführung (28) und/oder zur Wärmeabfuhr aufweist.

3. Beleuchtungsvorrichtung nach Anspruch 1 oder 2, **dadurch gekennzeichnet, dass** der Wärmeleitblock (4) formschlüssig in der Aussparung (9) des Gehäuseoberteils (10) angeordnet ist.

4. Beleuchtungsvorrichtung nach einem der Ansprüche 1 bis 3, **dadurch gekennzeichnet, dass** der Lichtquellenträger (5) und/oder ein der Lichtquelle (6) zugeordneter Reflektor (7) an dem Wärmeleitblock (4) durch Verschraubung (8) befestigt ist.

5. Beleuchtungsvorrichtung nach einem der Ansprüche 1 bis 4, **dadurch gekennzeichnet, dass** ausschließlich ein umlaufender Rand (16) des Gehäuseunterteils (13) mit einem umlaufenden Rand (14) des Gehäuseoberteils (10) verbunden ist.

6. Beleuchtungsvorrichtung nach einem der Ansprüche 1 bis 5, **dadurch gekennzeichnet, dass** in einer Vertiefung (29) des Gehäuseunterteils (13) eine Ansteuerelektronik (3) positioniert ist, die mit einem Anschlussende der Stromzuführung (28) elektrisch leitend verbunden ist, und dass der Lichtquellenträger (5) als eine Leiterplatte ausgebildet ist.

7. Beleuchtungsvorrichtung nach einem der Ansprüche 1 bis 6, **dadurch gekennzeichnet, dass** der Wärmeleitblock (4) und/oder das Gehäuseoberteil (10) und das Gehäuseunterteil (13) aus einem Metallmaterial bestehen.

## Claims

1. A lighting apparatus for airports, especially flush lights, comprising
- a housing having a bottom housing part and a housing top, wherein the housing top comprises a recess for accommodating a lens, via which light can be emitted to the ambient environment from a light source arranged in an interior space of the housing, and
- a light source carrier on which the light source is mounted, wherein the light source carrier (5) is fixed to a heat-conducting block (4) which is secured in a recess (9) of the housing top (10), wherein the peripheral sides (22) and/or at least partly the flat sides (19) of the heat-conducting block (4) rest directly on corresponding sides (27) of the recess (9),
**characterized in that** the heat-conducting block (4) is detachably fixed to the housing top (10).

2. A lighting apparatus according to claim 1, **characterized in that** the heat-conducting block (4) comprises a first surface section (24) for accommodating the light source carrier (5) and for heat dissipation on the one hand, and an adjacent second surface section (25) for diverting a power supply (28) and/or for heat dissipation on the other hand.

3. A lighting apparatus according to claim 1 or 2, **characterized in that** the heat-conducting block (4) is arranged in a form fitting manner in the recess (9) of the upper housing part (10).

4. A lighting apparatus according to one of the claims 1 to 3, **characterized in that** the light source carrier (5) and/or a reflector (7) associated with the light source (6) are fixed to the heat-conducting block (4) by a screwed connection (8).

5. A lighting apparatus according to one of the claims 1 to 4, **characterized in that** only a circumferential edge (16) of the bottom housing part (13) is connected to a circumferential edge (14) of the housing top (10).

6. A lighting apparatus according to one of the claims 1 to 5, **characterized in that** triggering electronics (3) are positioned in a cavity (29) of the bottom housing part (13), which electronics are connected in an electrically conductive manner to a terminal end of the power supply (28), and that the light source carrier (5) is arranged as a printed circuit board.

7. A lighting apparatus according to one of the claims 1 to 6, **characterized in that** the heat-conducting block (4) and/or the housing top (10) and the bottom housing part (13) consist of a metal material.

## Revendications

1. Dispositif d'éclairage pour aéroports, en particulier feu encastré, avec
- un boîtier comportant une partie inférieure de boîtier et une partie supérieure de boîtier, la partie supérieure de boîtier comportant un évidement pour recevoir un cabochon par l'intermédiaire duquel de la lumière d'une source lumineuse disposée à l'intérieur du boîtier peut être diffusée dans un environnement,
- un support de source lumineuse sur lequel la source lumineuse est montée, le support de source lumineuse (5) étant fixé sur un bloc conducteur thermique (4) qui est bloqué dans une découpe (9) de la partie supérieure de boîtier (10), des côtés de bord (22) et/ou au moins en partie des côtés plats (19) du bloc conducteur thermique (4) reposant directement sur des côtés correspondants (27) de la découpe (9),
**caractérisé en ce que** le bloc conducteur thermique (4) peut être fixé de manière amovible à la partie supérieure de boîtier (10).

2. Dispositif d'éclairage selon la revendication 1, **caractérisé en ce que** le bloc conducteur thermique (4) présente, d'une part, une première partie de surface (24) destinée à recevoir le support de source lumineuse (5) et à évacuer la chaleur et, d'autre part, une deuxième partie de surface (25) voisine pour la dérivation d'une arrivée de courant (28) et/ou pour l'évacuation de la chaleur.

3. Dispositif d'éclairage selon la revendication 1 ou 2, **caractérisé en ce que** le bloc conducteur thermique (4) est disposé en correspondance de forme dans la découpe (9) de la partie supérieure de boîtier (10).

4. Dispositif d'éclairage selon l'une des revendications 1 à 3, **caractérisé en ce que** le support de source lumineuse (5) et/ou un réflecteur (7) associé à la source lumineuse (6) sont fixés au bloc conducteur thermique (4) par vissage (8).

5. Dispositif d'éclairage selon l'une des revendications 1 à 4, **caractérisé en ce que** seul un bord circonférentiel (16) de la partie inférieure de boîtier (13) est relié à un bord circonférentiel (14) de la partie supérieure de boîtier (10).

6. Dispositif d'éclairage selon l'une des revendications 1 à 5, **caractérisé en ce qu'**est positionnée dans un renfoncement (29) de la partie inférieure de boîtier (13) une unité électronique d'activation (3) qui est reliée de façon électriquement conductrice par une extrémité de connexion à l'arrivée de courant (28), et **en ce que** le support de source lumineuse (5) est conformé comme une carte de circuits imprimés.

7. Dispositif d'éclairage selon l'une des revendications 1 à 6, **caractérisé en ce que** le bloc conducteur thermique (4) et/ou la partie supérieure de boîtier (10) et la partie inférieure de boîtier (13) se composent d'un matériau métallique.
